(19) Europäisches Patentamt
European Patent Office
Office européen des brevets

(11) EP 3 128 090 B1

(12) **EUROPEAN PATENT SPECIFICATION**

(45) Date of publication and mention
of the grant of the patent:
**21.03.2018 Bulletin 2018/12**

(51) Int Cl.:
***E04B 2/00*** *(2006.01)*      ***E04B 2/74*** *(2006.01)*
***E04F 13/08*** *(2006.01)*      ***E04B 2/28*** *(2006.01)*
***F16B 5/02*** *(2006.01)*

(21) Application number: **16181675.6**

(22) Date of filing: **28.07.2016**

(54) **PREFABRICATED COMPOSITE BUILDING ELEMENT FOR THE COVERING OF A CONSTRUCTION COMPRISING AT LEAST TWO SUPPORTS ON A BUILDING SITE**

VORGEFERTIGTES VERBUNDBAUELEMENT ZUM ABDECKEN EINER KONSTRUKTION MIT MINDESTENS ZWEI TRÄGERN AUF EINER BAUSTELLE

ÉLÉMENT DE CONSTRUCTION COMPOSITE PRÉFABRIQUÉ POUR LA CONSTRUCTION D'UN REVÊTEMENT COMPRENANT AU MOINS DEUX SUPPORTS SUR UN SITE DE CONSTRUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.08.2015 NL 2015260**

(43) Date of publication of application:
**08.02.2017 Bulletin 2017/06**

(73) Proprietor: **Insulation Solutions B.V.
5048 CK Tilburg (NL)**

(72) Inventors:
• **HENDRIKS, Joannes Augustinus Antonius
5048 CK TILBURG (NL)**
• **VERBOVEN, Michael Clasina Cornelis
5048 CK TILBURG (NL)**

(74) Representative: **Algemeen Octrooi- en
Merkenbureau B.V.
P.O. Box 645
5600 AP Eindhoven (NL)**

(56) References cited:
**EP-A2- 2 182 125     DE-A1- 3 210 147
DE-U- 6 606 554     JP-A- 2004 052 540**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The invention relates to a prefabricated composite building element for the covering of a construction comprising at least two supports on a building site.

A composite building element is known from NL 2010034. The known composite building element comprises a plate-like element; a first layer of insulation material positioned on a side of the plate-like element; a frame positioned at a side of the first layer of insulation material, which side is directed away from the plate-like element, which frame is connected to the plate-like element by at least two connecting means extending between the plate-like element and the frame. According to NL 2010034, the building construction is covered by fixing the plate-like element of the composite building element to the building construction.

Another building construction is described in US2012/0174503.
EP2182125A2 discloses a product and a method respectively according to the preambles of claims 1 and 14. Although the building element described in NL 2010034 provides advantages, in particular with respect to reducing the amount of labour and time needed during cladding and covering of building constructions, it is an object of the invention to further improve the composite building element, in particular with respect to costs.

To this end, the invention provides a prefabricated composite building element according to claim 1. The composite building element according to the invention comprises a plate-like element connectable to the at least two supports of the construction; a frame connected to the plate-like element by at least two connecting means in such a way that an interspace distance is formed between the frame and the plate-like element; and insulation means positioned in between the frame and the plate-like element.

According to the invention, the connecting means comprise interspace distance adjustment means for adjusting the interspace distance between the plate-like element and the frame in a connected state thereof.

With this, the thickness of the composite building element can be varied whilst the plate-like element and the frame are connected to each other, and without the need for disassembly of the composite building element. This is in particular advantageous during transport of the prefabricated composite building element, since then the composite building element may be prefabricated with a relatively small interspace distance, and after or just before installation the interspace distance may be increased again in a simple manner by means of using the interspace distance adjustment means, such that a better insulation value for the composite building element is obtained. Transport volume is thus decreased, without negatively influencing the insulation values.

It is noted that according to the invention the interspace distance adjustment means are arranged for adjusting the interspace distance whilst the plate-like element and the frame are connected to each other. It is thus not necessary to disassemble the composite building element for changing the interspace distance between the frame and the plate-like element. This is not possible with the building elements according to the prior art, where adjustment of a interspace distance between a frame and a plate requires disconnecting and/or replacing at least several parts.

Summarized, the building element according to the invention reduces transport costs, whilst maintaining desired insulation values, with which the object of the invention is achieved.

A cladding element is connectable to the frame, with which the building may be clad or covered completely with a desired material or finish. In an embodiment, the cladding element is already connected to the frame, although it is conceivable that the cladding element is only attached to the frame once the composite building element has been attached to the building.

As an additional advantage of the composite building element according to the invention, it is noted that the interspace adjustment means allow a more precise alignment of the frame and/or cladding of several composite building elements.

Further advantageous embodiments will be elucidated below.

In an embodiment, the connecting means comprise the interspace distance adjustment means. Thus, the connecting means themselves are arranged for adjusting the interspace distance between the plate-like element and the frame in a state wherein the plate-like element is connected to the frame. With this, the connecting means fulfill two functions at once. Moreover, combining the connection function with the distance adjustment functions ensures that heat transfer between the plate-like element and the frame is minimized, due to the fact that the total area available for conductive heat transfer between the frame and the plate-like element is reduced.

In an embodiment, the interspace distance adjustment means are arranged for increasing said interspace distance. In particular, the interspace distance adjustment means may be arranged for only increasing said interspace distance. This is advantageous, since this allows the composite building element to have a relatively small thickness during transport, and to have an increased thickness during and/or after being attached to the building. When the interspace adjustment means are arranged for only increasing said distance, there is no risk that the thickness decreases after having been attached to the building, which may lead to deteriorating thermal insulation characteristics.

In an embodiment, the interspace distance adjustment means are arranged to be controllably adjustable, in particular adjustable in a stepless manner. With this it is meant that the distance between the frame and the plate-like element may be fixedly set at intervals, or even fixedly set at a desired intermediate position. This allows the composite building element to be precisely aligned.

It is conceivable, that the interspace distance adjustment means are provided with a locking element that is arranged for locking the interspace distance adjustment means. With the locking element it is possible to lock the position obtained by the interspace adjustment means. The locking element may be actuated manually. The locking element may be arranged for locking the interspace distance adjustment means once a predetermined interspace distance has been reached. This way the locking element is actuated automatically, and the interspace distance cannot be reduced anymore once a predetermined interspace distance has been reached, ensuring that the desired insulation value is obtained.

The insulation means may comprise a first layer of insulation material. Further layers of insulation materials may be provided as well.

In an embodiment, a protective layer is provided near the frame. The protective layer provides protection of the composite building element, for instance during transport, but also during handling and positioning thereof. The protective layer, which may be a plastic, such as a PE film, also prevents moisture from reaching the inner face of the composite building element when the latter is connected to the building to be clad, but when the cladding element itself has not been connected yet.

The R-value is a measure of thermal resistance used in the building and construction industry, and is a well-known parameter to those skilled in the art. Under uniform conditions it is the ratio of the temperature difference across an insulator ($\Delta T$, SI unit K) and the heat flux (heat transfer per unit area, $Q_A$, SI unit W/m$^2$) through it as described by:

$$R = \frac{\Delta T}{Q_A}$$

The R-value is the unit thermal resistance, SI units m$^2$K/W This is used for a unit value of any particular material, and where there is more than one material present the thermal resistance across the materials present is defined as the Rc value. It can also be expressed as the thickness of the material (d, SI unit metres) divided by the thermal conductivity of the material, denoted by $\lambda$ (lamba, SI unit W/m·K):

$$R = \frac{d}{\lambda}$$

The higher R-value the better the building insulation's effectiveness.

It was already described in NL 2010034 that a composite building element having two layers of insulation has improved thermal characteristics. Thus in an embodiment, the composite building element comprises two layers of insulation in between the frame and the plate-like element. For example, the composite building element disclosed in NL 2010034 with a total of two layers of insulation (lambda 0.032) with a thickness of 125 mm has an Rc value of 3.54 m$^2$K/W. This is very much higher than a traditional cassette with one layer of insulation material (lambda 0.032) which even with a thickness of 150 mm only reaches an Rc value of 3.45 m$^2$K/W. The same and even higher Rc values are obtainable with the composite building element according to the invention, in particular when the connecting means comprise the interspace distance adjustment means. Once the interspace distance is increased to the desired value, the calculated Rc value is readily obtainable.

It may further be advantageous to use a different material for the second layer of insulation than in the first layer. In this way the skilled person can optimize the thermal insulation properties of the composite building element.

The thickness of the first and second layers of insulation material may be chosen as desired by the skilled person. To obtain a Rc value of 4.5 m$^2$K/W, the thickness may be approximately 200 to 210 mm, with a lambda value of 0.035 W / mK. Other values are conceivable as well.

The material of the insulating means, and in particular of the first and second layers of insulation material may be chosen as desired by the skilled person. The first and second layers of insulation material may be chosen from the group consisting of stone wool, glass wool, a foam, preferably polyurethane (PUR, more preferably polyisocyanurate (PIR). The invention enables standard insulation materials that are available to be used. A preferred insulation material is a stone or glass wool. A particularly preferred insulation material is foam, for example an expanded polystyrene foam, a polyurethane or a polyisocyanurate.

In an embodiment. the plate-like element is perforated. Approximately 19% of all traditional cassettes are perforated on the inner face so that the cassette can absorb sound from inside the building in order to optimize the acoustics inside the building. The inventors have also found that the plate-like element may be perforated. Different perforation patterns are known by the skilled person, for example perfo 3 and perfo, 4 (manufactured by SAB-profile, IJsselstein, The Netherlands).

In an embodiment the plate-like element is perforated. In that case it is particularly preferred to have an extra layer between the plate-like element and the insulating means. This overcomes a problem of the cassettes according to the prior art which may also have a perforated inner face. A perforated inner face allows for sound absorption but a problem with the use of perforated inner face in a traditional cassette is that the cassette is no longer air tight. This has obvious consequences for the environmental quality on the inside of the completed building.

An example of an extra layer that can be provided according to the invention is black glass fleece. The insulation means may comprise a first and second layer of insulating material. A damp proof layer may be provided in between these two layers of insulating material. The damp proof layer prevents moist from condensating in the insulation material.

In yet another embodiment, the plate-like element has a width of at least 3 meters and a length of at least 5 meters. The size of the plate-like element has been chosen to fit the current industry standards so that the new composite building element can be easily used on building sites. Furthermore, the plate-like element can have different lengths, for example at least 5 meters, at least 10 meters, at least 15 meters, so that the plate-like element can span at least two, at least three and at least four steel columns of a building construction so that the number of handling steps, in particular, the number of fixing steps can be reduced relative to the traditional cassettes.

According to an aspect, a method is provided of covering a construction comprising at least two supports on a building site, the method comprising the steps of providing a prefabricated composite building element according to the invention, and connecting the plate-like element to the at least two supports, wherein the method comprises the step of adjusting the interspace distance between the plate-like element and the frame by means of the interspace adjustment means.

The step of adjusting the interspace distance between the plate-like element and the frame takes place in a connected state thereof. As described above, the distance is adjustable without having to disassemble the composite building element, or to disconnect and/or replace parts, which is not possible with the prior art building elements.

In particular, the adjusting of the interspace distance takes place after the plate-like element has been connected to the at least two supports.

It is advantageous when the method comprises the step of increasing the interspace distance.

The invention also relates to a building construction comprising a composite building element as disclosed herein.

The invention shall now be illustrated by a number of non-limiting examples, by means of the accompanying figures, in which:

Fig. 1 - is a side view of a composite building element according to the invention, connected to a support of a building;
Fig. 2a - is a front view of a frame for a composite building element according to an embodiment of the invention;
Fig. 2b - is a front view of a frame for a composite building element according to an embodiment of the invention;
Fig. 3 - is a perspective view of a plate-like element for a composite building element according to the invention;
Fig. 4 - is a perspective view of the plate-like element of Fig. 3, denoting positions for the connecting means;
Fig. 5a-5g - are perspective views of the interspace adjustment means according to the present invention;
Fig. 6a and 6b - are schematic side views of the composite building element according to the invention.

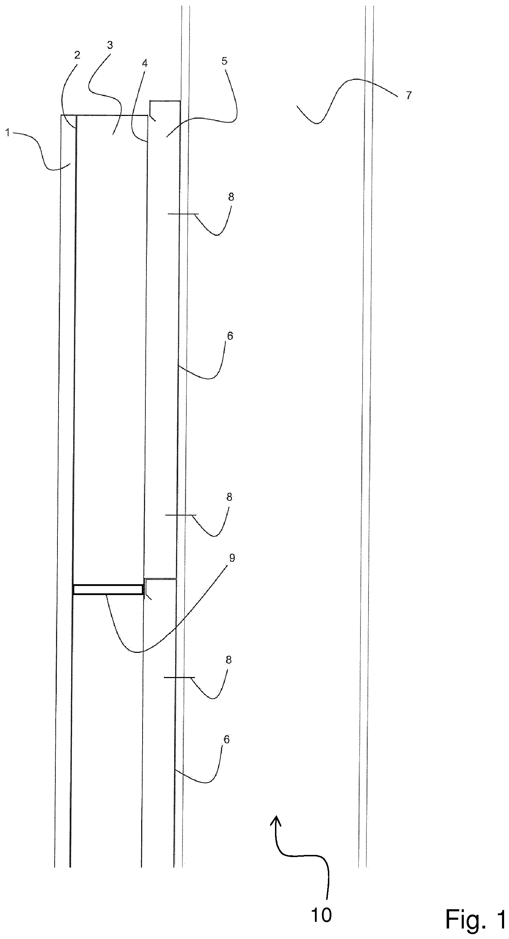

Figure 1 shows a side view of a composite building element 10 which is connected to a (vertical) support 7 of a building. The composite building element 10 comprises a plate-like element 6, fixed to the support by connecting means 8. A first layer of insulation material 5 is provided at a side of the plate-like element. A damp proof layer 4 is provided at a side of the first insulation layer 5, which side is directed away from the plate-like element. A second layer of insulation material 3, is provided at a side of the damp proof layer 4, which side is directed away from the plate-like element. Here, insulations means 3, 5 are thus formed by two layers of insulation material. A water repellent, breathable protective film 2, is provided at a side of the second layer of insulation material 3, which side is directed away from the plate-like element 6. A frame 1 is provided at a side of the water repellent, breathable protective film 2, which side is directed away from the plate-like element 1. Instead of the layers shown here, a single layer of insulation material may be provided in between the frame 1 and the plate-like element 6. The frame 1, is fixed to the plate-like element 6 by connecting means in the form of elongate bodies such as bolts or screws 9.

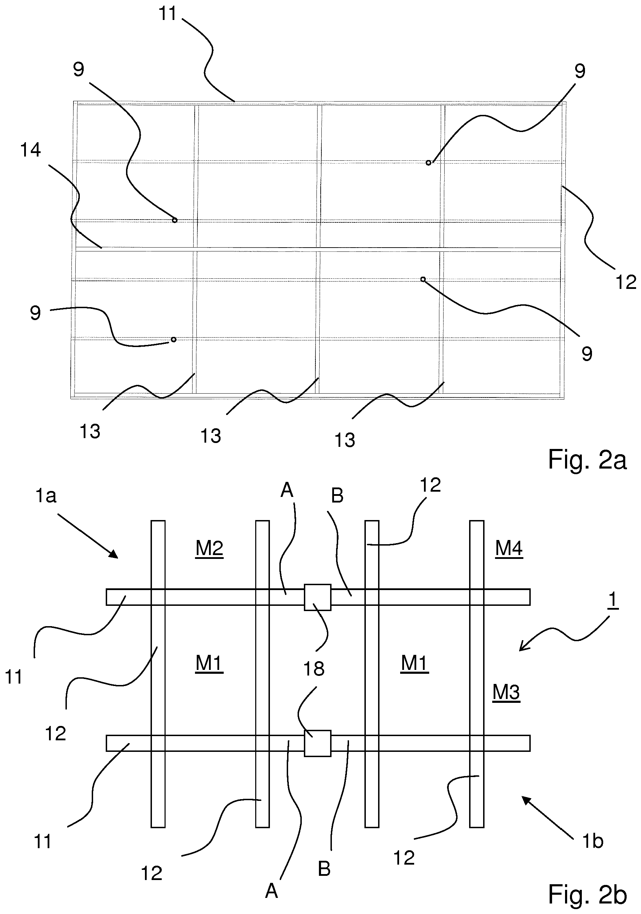

Figure 2a shows an embodiment of a frame 1 comprising a horizontal steel strip 11, which, in the embodiment shown, has a length of 5 meters and a vertical steel strip 12, which has a length of 3 meters. The frame may further comprise three metal interconnecting strips 13, extending across the width of the frame and positioned at 1.25 meter intervals along the horizontal (5 meter) length of the frame. A further metal strip 14, extends across the length of the frame and is positioned at 1.5 meters along the width of the frame. The positioning of a number of connecting means 9 that extend between the plate-like element and the frame is also indicated.

In an alternative embodiment (not shown) the frame of Fig. 2a comprises two horizontal stips 11 and four vertical strips 12 positioned at regular intervals. A similar placement of the strips 11, 12 is shown in Fig. 2b.

Fig. 2b shows a further embodiment of the frame 1, comprising horizontal bars 11, and vertical strips 12. The bars 11 and strips 12 are aligned in such a way as to form a lattice, having several lattice interstices that are bound by the bars 11 and strips 12. Several of these lattice interstices s are indicated by reference signs M1, M2, M3, and M4. The central lattice interstice M1 is bound by two horizontal bars 11 and two vertical strips 12. Side lattice interstice M2 is bound by two vertical strips 12 and one horizontal bar 11, whilst side lattice interstice M3 is bound by one vertical strip 11 and two horizontal bars 12. Edge interstice M4 is bound by only one horizontal bar 11 and one vertical strip 11. The frame 1 is dimensioned such that all lattice interstices M1, M2, M3 and M4 define the same lattice area. This means that in case several frames 1 are positioned side by side, the distance between two adjacent vertical strips 12 and/or horizontal bars 11 is the same for all lattice interstices M1, M2, M3 and M4. In this way, a uniform lattice interstice surface M1, M2, M3, M4 is obtained, which allows the final cladding of the frame to be performed with standardized elements.

In the embodiment shown, the lattice 1 comprises two parts 1a, 1b, connected by fixing elements 18. The two parts of the lattice 1 are pivotally provided, by means of the interspace adjustment means (not shown), and are capable of pivoting towards each other, for allowing the interspace distance to be increased / decreased. The outer ends A, B of the two parts of the frame 1 may then be fixed by means of the fixing elements 18.

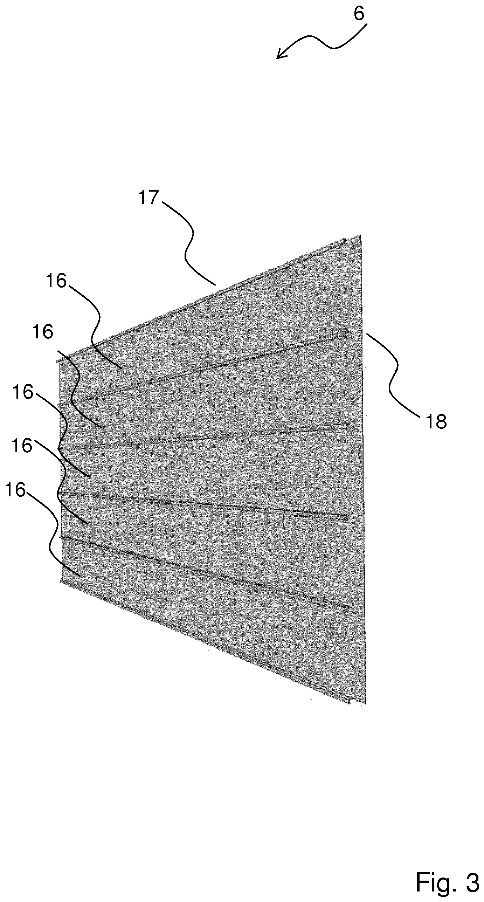

Figure 3 shows a plate-like element 6, comprising a number of subcomponents 16. Each subcomponent has a length of 5 meters and a width of 0,6 meters, giving a total width 17 of the plate-like element 6 of 3 meters.

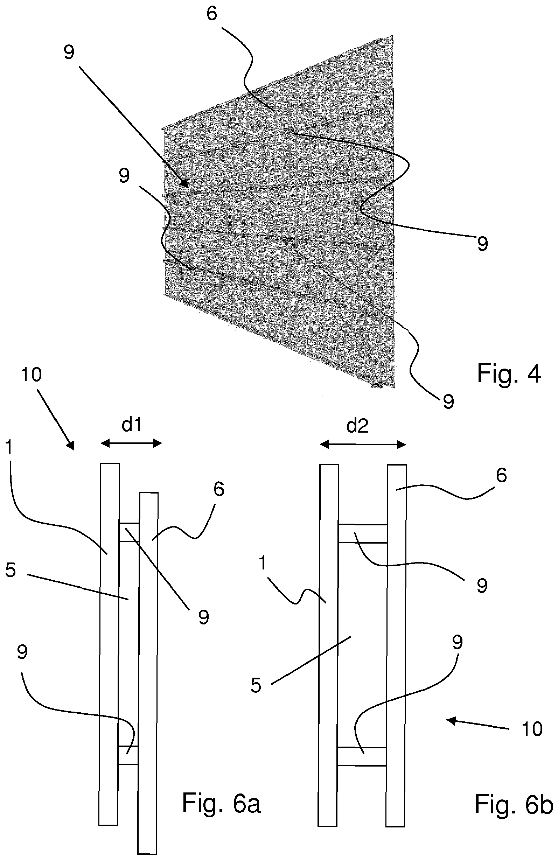

Figure 4 shows a plate-like element 6, provided with a number of connecting means 9, which connecting means all protrude from the same side of the plate-like element 6 and where the connecting means are positioned in a diagonal arrangement with respect to each other. Other configurations are of course conceivable.

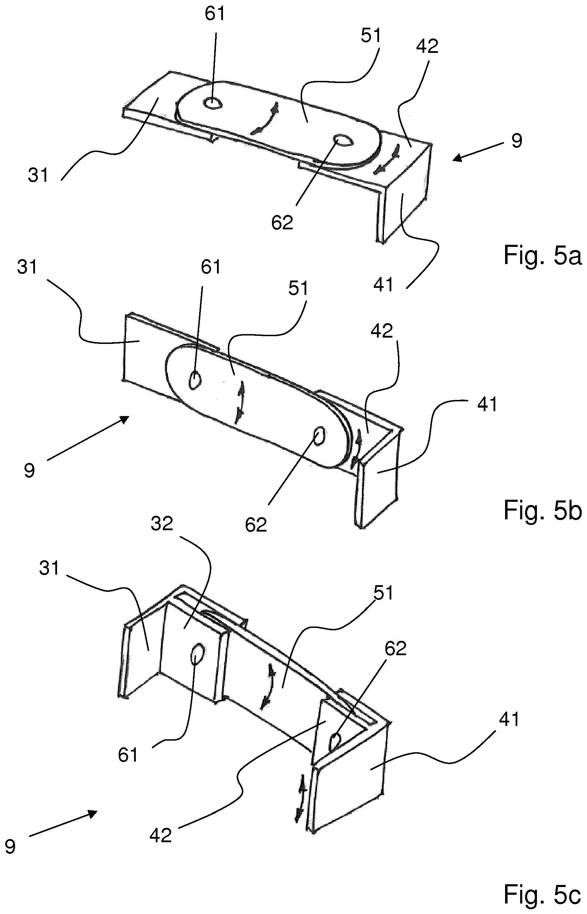

Now referring to Figure 6a and 6b, a schematic side view of the building element 10 is shown. Fig. 6a shows the building element 10, comprising the plate-like element 6, the frame 1, and the insulation material 5 positioned in between. The connecting elements 9 connect the plate-like element 6 to the frame 1. As indicated, an interspace distance d1 is smaller in Fig. 6a, compared to the interspace distance d2 as shown in Fig. 6b. To this end, the connecting elements 9 are arranged as interspace distance adjustment means 9. Details of these interspace adjustment means 9 will be shown with respect to Fig. 5a-5g.

In general, the connecting means 9 disclosed in Figs. 5a-5g comprise a first connection part 41 and a second connection part 31. With these connection parts 31, 41, the connecting means 9 are connectable to the plate-like element and the frame. The first connection part 41 and the second connection part 31 are generally connected to each other by means of interspace distance adjustment means 51, which are arranged for increasing/decreasing a distance between the plate-like element and the frame, for instance by a pivoting or translating movement between the first connection part and the second connection part. The interspace distance may be adjusted whilst the frame and the plate-like element are connected to each other. Several embodiments of the interspace adjustment means will next be discussed. In the following, like elements are provided with the same reference sign.

Fig. 5a shows an L-shaped first connection part 41, 42, a plate-like second connection part 31, and a plate-like interspace adjustment element 51 that is connected to the connection parts 41, 42, 51 by means of two hinges 61, 62.

Fig. 5b shows an interconnecting means 9 similar to the one in Fig. 5a, which is used in a slightly rotated form. The interconnecting means 9 has an L-shaped first connection part 41, 42, a plate-like second connection part 31, and a plate-like interspace adjustment element 51 that is connected to the connection parts 41, 42, 51 by means of two hinges 61, 62.

In fig. 5c, both connection parts 31, 32, 41, 42 are L-shaped, and the interspace adjustment element 51 is hingedly provided between two enclosing parts of the connection parts, which enclosing parts extend mainly parallel to each other.

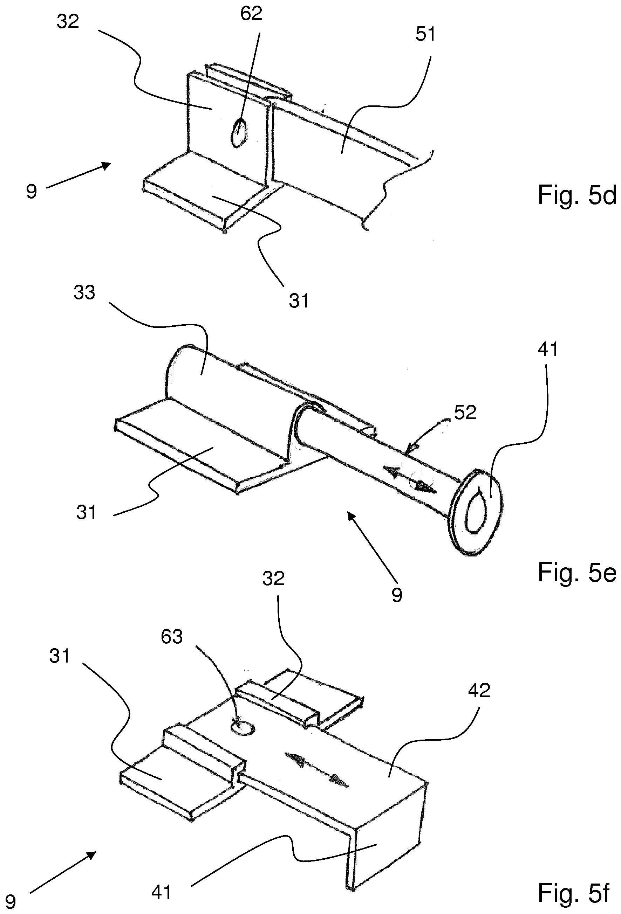

Fig. 5d shows an alternative arrangement of the connection between the second connection part 31 and the interspace adjustment element 51 of Fig. 5c.

Fig. 5e shows the connecting means 9 having a first connection part 41 that is rigidly connected to the interspace adjustment element 52 in the form of a cylinder 52. The cylinder 52 is slidably connected to a hollow cylinder 33 provided on the second connection part 31. This way, a translation movement will be possible for decreasing and/or increasing the interspace distance. It will be understood that other shapes and forms are possible as well, such as, for instance, square, rectangular, oval, and/or polygonal.

Fig. 5f shows an L-shaped first connection part 41, 42 that is slidably received in the second connection part 31. To this end, flange-like edges 32 are provided on the second connection part 31. Additionally, a locking element 63 is provided, which connects with a hole in the stem 42 of the L-shaped first connection part 41, once a pre-determined distance is obtained. In use, the distance between the frame and the plate-like element is preferably minimal at first, and then later increased, to obtain the desired insulation values. Once the desired distance is obtained, the locking element is activated (either manually or automatically) to ensure that the desired distance can not be changed anymore. These locking means may be incorporated in the connection elements 9, in the interspace adjustment means 51, and/or may be provided separately between the frame and the plate-like element.

Example 1

A composite building element (10) was manufactured by providing a number of sub(components) (16) and positioning at least two (sub)component elements (16) next to each other and ii) fixing the thus positioned component elements to each other to produce a plate-like element (6). A number of connecting means (9) comprising the interspace distance adjustment means were then fixed to the plate-like element (6). Subsequently a frame (1) was connected to the plate-like element by the said connecting means (9). A first layer of insulation material (5) was placed on the plate-like element (6), then a damp proof layer (4) was placed on the first layer of insulation material (5). Subsequently a second layer of insulation material (3) was placed on the damp proof layer (4) and then the second layer of insulation material was covered by a water repellent but breathable protective film (2). The distance between the frame (1) and the plate-like element (6) was decreased by using the interspace adjustment means (51). The thickness of the composite building element (10) was reduced to approximately 60%. The composite building element was transported to the building, and attached thereto. Then, the thickness of the composite building element (10) was increased again by using the interspace adjustment means (51), to obtain the desired thickness. Finally, the interspace distance was fixed.

Example 2

A composite building element (10) was connected to a steel support (7) of a building construction by using fixing bolts as a connecting means (8). Subsequent composite building elements (10) were positioned and fixed one after the other until the desired sections of the building construction were covered. The interspace adjustment means (51) were used to align the frames of the composite building elements (10) used. A cladding was then fixed to the number of frame (1) of the composite building element (10).

**Claims**

1. Composite building element (10) for the covering of a construction comprising at least two supports on a building site, wherein the composite building element comprises:

   - a plate-like element (6) connectable to the at least two supports of the construction;
   - a frame (1) connected to the plate-like element (6) by at least two connecting means (9) in such a way that an interspace distance is formed between the frame (1) and the plate-like element (6);
   - insulation means (3, 5) positioned in between the frame (1) and the plate-like element (6);

   **characterized in that** the composite building element comprises interspace distance adjustment means that are arranged for adjusting the interspace distance between the plate-like element and the frame in a connected state thereof.

2. Composite building element according to claim 1, wherein the interspace distance adjustment means are arranged for adjusting the interspace distance by means of a pivoting movement or translating movement.

3. Composite building element according to claim 1 or 2, wherein the connecting means (9) comprise the interspace distance adjustment means.

4. Composite building element (10) according to claim 3, wherein the connecting means comprise a first connection part and a second connection part that are connected to each other by means of the interspace distance adjustment means.

5. Composite building element (10) according to any of the previous claims, wherein the interspace distance adjustment means are arranged for increasing said interspace distance.

6. Composite building element (10) according to any of the previous claims, wherein the interspace distance adjustment means are provided with a locking element for locking the interspace distance adjustment means once a predetermined interspace distance has been reached.

7. Composite building element (10) according to any of the previous claims, wherein the interspace adjustment means are arranged to be controllably adjustable, in particular adjustable in a stepless manner.

8. Composite building element (10) according to any of the previous claims, wherein a protective layer is provided near the frame.

9. Composite building element (10) according to any of the previous claims, wherein the insulation means comprise a first and second layer of insulating material.

10. Composite building element (10) according to claim 9, wherein a damp proof layer is provided in between the two layers of insulating material.

11. Composite building element (10) according to claim 10 or 11, wherein the first and second layers of insulation material are chosen from a group consisting of stone wool, glass wool, a foam, preferably polyurethane (PUR), more preferably polyisocyanurate (PIR).

12. Composite building element (10) according to any of the previous claims, wherein the plate-like element (6) is perforated, and wherein an extra layer between the plate-like element (6) and the first insulation layer is provided, for example black glass fleece.

13. Composite building element (10) according to any of the previous claims, wherein the plate-like element has a width of at least 3 meters and a length of at least 5 meters.

14. Method for covering a construction comprising at least two supports on a building site, comprising the steps of providing a prefabricated composite building element according to any one of the previous claims, and connecting the plate-like element to the at least two supports, **characterized in that** the method comprises the step of adjusting the interspace distance between the plate-like element and the frame, in a connected state thereof, by means of the interspace adjustment means.

15. Method according to claim 14, wherein the step of adjusting the interspace distance takes place after the plate-like element has been connected to the at least two supports.

16. Method according to claim 14-15, wherein the method comprises the step of increasing the interspace distance.

17. Method according to claim 16, wherein subsequent to the step of increasing the interspace distance, a cladding element is connected to the frame.

18. Building construction, comprising one or more composite building elements according to one or more of the previous claims 1-13.

**Patentansprüche**

1. Verbundbauelement (10) zum Abdecken einer Konstruktion, die mindestens zwei Träger auf einer Baustelle umfasst, wobei das Verbundbauelement (10) umfasst:

    - ein plattenartiges Element (6), das mit den mindestens zwei Trägern der Konstruktion verbindbar ist;
    - einen Rahmen (1), der mit dem plattenartigen Element (6) durch mindestens zwei Verbindungsmittel (9) derart verbunden ist, dass ein Zwischenraumabstand zwischen dem Rahmen (1) und dem plattenartigen Element (6) ausgebildet ist;
    - Isoliermittel (3, 5), die zwischen dem Rahmen (1) und dem plattenartigen Element (6) angeordnet sind;

    **dadurch gekennzeichnet, dass** das Verbundbauelement (10) Zwischenraumabstand-Einstellmittel umfasst, die zum Einstellen des Zwischenraumabstandes zwischen dem plattenartigen Element und dem Rahmen in einem verbundenen Zustand davon angeordnet sind.

2. Verbundbauelement (10) nach Anspruch 1, wobei die Zwischenraumabstand-Einstellmittel zum Einstellen des Zwischenraumabstandes mittels einer Schwenkbewegung oder Translationsbewegung angeordnet sind.

3. Verbundbauelement (10) nach Anspruch 1 oder 2, wobei die Verbindungsmittel (9) die Zwischenraumabstand-Einstellmittel umfassen.

4. Verbundbauelement (10) nach Anspruch 3, wobei die Verbindungsmittel ein erstes Verbindungsteil und ein zweites Verbindungsteil umfassen, die mittels der Zwischenraumabstand-Einstellmittel miteinander verbunden sind.

5. Verbundbauelement (10) nach einem der vorhergehenden Ansprüche, wobei die Zwischenraumabstand-Einstellmittel zum Erhöhen des Zwischenraumabstands angeordnet sind.

6. Verbundbauelement (10) nach einem der vorhergehenden Ansprüche, wobei die Zwischenraumabstand-Einstellmittel mit einem Verriegelungselement zum Verriegeln der Zwischenraumabstand-Einstellmittel, sobald ein vorbestimmter Zwischenraumabstand erreicht worden ist, versehen sind.

7. Verbundbauelement (10) nach einem der vorhergehenden Ansprüche, wobei die Zwischenraumabstand-Einstellmittel derart angeordnet sind, dass sie steuerbar einstellbar sind, insbesondere in einer stufenlosen Weise einstellbar sind.

8. Verbundbauelement (10) nach einem der vorhergehenden Ansprüche, wobei eine Schutzschicht in der Nähe des Rahmens vorgesehen ist.

9. Verbundbauelement (10) nach einem der vorhergehenden Ansprüche, wobei die Isolationsmittel eine erste und eine zweite Schicht aus isolierendem Material umfassen.

10. Verbundbauelement (10) nach Anspruch 9, **dadurch gekennzeichnet, dass** zwischen den beiden Schichten aus isolierendem Material eine feuchtigkeitsundurchlässige Schicht vorgesehen ist.

11. Verbundbauelement (10) nach Anspruch 10 oder 11, wobei die erste und die zweite Schicht aus isolierendem Material ausgewählt sind aus einer Gruppe bestehend aus Steinwolle, Glaswolle, einem Schaum, vorzugsweise Polyurethan (PUR), besonders bevorzugt Polyisocyanurat (PIR).

12. Verbundbauelement (10) nach einem der vorhergehenden Ansprüche, wobei das plattenartige Element (6) perforiert ist und wobei eine zusätzliche Schicht zwischen dem plattenartigen Element (6) und der ersten Isolationsschicht vorgesehen ist, zum Beispiel schwarzes Glasvlies.

13. Verbundbauelement (10) nach einem der vorhergehenden Ansprüche, wobei das plattenartige Element eine Breite von mindestens 3 Metern und eine Länge von mindestens 5 Metern aufweist.

14. Verfahren zum Abdecken einer Konstruktion mit mindestens zwei Trägern auf einer Baustelle, umfassend die Schritte Bereitstellen eines vorgefertigten Verbundbauelements nach einem der vorhergehenden Ansprüche und Verbinden des plattenartigen Elements mit den mindestens zwei Trägern, **dadurch gekennzeichnet, dass** das Verfahren den Schritt des Einstellens des Zwischenraumabstandes zwischen dem plattenartigen Element und dem Rahmen, in einem verbundenen Zustand davon, mittels der Zwischenraumabstand-Einstellmittel umfasst.

15. Verfahren nach Anspruch 14, wobei der Schritt des Einstellens des Zwischenraumabstandes nach dem Verbinden des plattenartigen Elementes mit den mindestens zwei Trägern erfolgt.

16. Verfahren nach Anspruch 14 bis 15, wobei das Verfahren den Schritt des Erhöhens der Zwischenraumdistanz umfasst.

17. Verfahren nach Anspruch 16, **dadurch gekennzeichnet, dass** nach dem Schritt des Vergrößerns des Zwischenraumabstandes ein Verkleidungselement mit dem Rahmen verbunden wird.

18. Gebäudekonstruktion, umfassend ein oder mehrere Verbundbauelemente nach einem oder mehreren der vorhergehenden Ansprüche 1 bis 13.

**Revendications**

1. Élément de bâtiment composite (10) pour le revêtement d'une construction comprenant au moins deux supports sur un chantier, dans lequel l'élément de bâtiment composite comprend :

   - un élément en forme de plaque (6) pouvant être relié aux au moins deux supports de la construction ;
   - un cadre (1) relié à l'élément en forme de plaque (6) par au moins deux moyens de liaison (9) de manière à ce qu'une distance intermédiaire soit formée entre le cadre (1) et l'élément en forme de plaque (6) ;
   - des moyens d'isolation (3, 5) positionnés entre le cadre (1) et l'élément en forme de plaque (6) ;

**caractérisé en ce que** l'élément de bâtiment composite comprend des moyens de réglage de distance intermédiaire qui sont agencés pour régler la distance intermédiaire entre l'élément en forme de plaque et le cadre dans un état relié de ceux-ci.

2. Élément de bâtiment composite selon la revendication 1, dans lequel les moyens de réglage de distance intermédiaire sont agencés pour régler la distance intermédiaire par un mouvement de pivotement ou un mouvement de translation.

3. Élément de bâtiment composite selon la revendication 1 ou 2, dans lequel les moyens de liaison (9) comprennent les moyens de réglage de distance intermédiaire.

4. Élément de bâtiment composite (10) selon la revendication 3, dans lequel les moyens de liaison comprennent une première partie de liaison et une deuxième partie de liaison qui sont reliées l'une à l'autre par l'intermédiaire des moyens de réglage de distance intermédiaire.

5. Élément de bâtiment composite (10) selon l'une des revendications précédentes, dans lequel les moyens de réglage de distance intermédiaire sont agencés pour augmenter ladite distance intermédiaire.

6. Élément de bâtiment composite (10) selon l'une des revendications précédentes, dans lequel les moyens de réglage de distance intermédiaire sont munis d'un élément de verrouillage pour verrouiller les moyens de réglage de distance intermédiaire une fois qu'une distance intermédiaire prédéterminée a été atteinte.

7. Élément de bâtiment composite (10) selon l'une des revendications précédentes, dans lequel les moyens de réglage d'espace intermédiaire sont agencés pour être réglables de manière contrôlable, en particulier réglables en continu.

8. Élément de bâtiment composite (10) selon l'une des revendications précédentes, dans lequel une couche de protection est prévue à proximité du cadre.

9. Élément de bâtiment composite (10) selon l'une des revendications précédentes, dans lequel les moyens d'isolation comprennent des première et deuxième couches de matériau isolant.

10. Élément de bâtiment composite (10) selon la revendication 9, dans lequel une couche étanche à l'humidité est prévue entre les deux couches de matériau isolant.

**11.** Élément de bâtiment composite (10) selon la revendication 10 ou 11, dans lequel les première et deuxième couches de matériau isolant sont choisies dans un groupe constitué de laine de roche, de laine de verre, d'une mousse, de préférence de polyuréthane (PUR), plus préférablement de polyisocyanurate (PIR).

**12.** Élément de bâtiment composite (10) selon l'une des revendications précédentes, dans lequel l'élément en forme de plaque (6) est perforé, et dans lequel une couche supplémentaire entre l'élément en forme de plaque (6) et la première couche d'isolation est prévue, par exemple en toison de verre noir.

**13.** Élément de bâtiment composite (10) selon l'une des revendications précédentes, dans lequel l'élément en forme de plaque a une largeur d'au moins 3 mètres et une longueur d'au moins 5 mètres.

**14.** Procédé de revêtement d'une construction comprenant au moins deux supports sur un chantier, comprenant les étapes qui consistent à fournir un élément de bâtiment composite préfabriqué selon l'une quelconque des revendications précédentes, et à relier l'élément en forme de plaque aux au moins deux supports, **caractérisé en ce que**
le procédé comprend l'étape qui consiste à régler la distance intermédiaire entre l'élément en forme de plaque et le cadre, dans un état relié de ceux-ci, par l'intermédiaire des moyens de réglage d'espace intermédiaire.

**15.** Procédé selon la revendication 14, dans lequel l'étape de réglage de la distance intermédiaire a lieu après que l'élément en forme de plaque a été relié aux au moins deux supports.

**16.** Procédé selon les revendications 14 et 15, dans lequel le procédé comprend l'étape qui consiste à augmenter la distance intermédiaire.

**17.** Procédé selon la revendication 16, dans lequel, après l'étape d'augmentation de la distance intermédiaire, un élément de parement est relié au cadre.

**18.** Construction de bâtiment, comprenant un ou plusieurs élément(s) de bâtiment composite(s) selon une ou plusieurs des revendications précédentes 1 à 13.

Fig. 1

11

Fig. 2a

1a
M2
A
B
12
M4
M1
M3
11
12
18
11
12
M1
1
1b
A
B
12

Fig. 2b

Fig. 3

6

9

9

9

9

Fig. 4

10

d1

1

6

5

9

9

Fig. 6a

d2

1

6

9

5

9

10

Fig. 6b

Fig. 5a

Fig. 5b

Fig. 5c

32    62    51

9 →

Fig. 5d

31

33

41

31    52

9 →

Fig. 5e

32

63

31    42

9 →    41

Fig. 5f

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- NL 2010034
- US 20120174503 A
- EP 2182125 A2